# EUROPÄISCHE PATENTSCHRIFT

(11) **EP 2 559 334 B1**
(45) Veröffentlichungstag und Bekanntmachung des Hinweises auf die Patenterteilung: **31.08.2016**
(21) Anmeldenummer: 12170657.6
(22) Anmeldetag: 04.06.2012
(51) Int. Cl.: A01F 29/22

(54) **Verfahren und Vorrichtung zur Zustandserkennung einer Schneideinrichtung**
Method and device for detecting the condition of a cutting device
Procédé et dispositif destinés à la reconnaissance d'état d'un dispositif de coupe

(30) Priorität: 16.08.2011 DE 102011052726
(43) Veröffentlichungstag der Anmeldung: 20.02.2013
(73) Patentinhaber: CLAAS Selbstfahrende Erntemaschinen GmbH, 33428 Harsewinkel (DE)
(72) Erfinder: Behnke, Willi, 33803 Steinhagen (DE); Huster, Jochen, 33330 Gütersloh (DE); Roggenland, Michael, 59757 Arnsberg (DE)

(56) Entgegenhaltungen:
- EP-A1- 0 291 216
- EP-A1- 1 614 342
- EP-A1- 1 844 640
- FR-A1- 2 430 191
- US-A- 4 934 612

## Beschreibung

Die Erfindung betrifft ein Verfahren sowie eine Vorrichtung zur Zustandserkennung einer Schneideinrichtung für landwirtschaftliches Erntegut.

Landwirtschaftliche Erntemaschinen wie beispielsweise selbstfahrende Feldhäcksler sind mit einem Häckselaggregat ausgestattet, das eine Häckseltrommel umfasst, die sich gegenüber einer ruhenden Gegenschneide dreht. Erntegut, das in einen von Häckseltrommel und Gegenschneide gebildeten Eingriffsbereich gerät, wird durch Zusammenwirkung von an der rotierenden Häckseltrommel befestigten Schneidmessern mit der Gegenschneide zerkleinert, insbesondere gehäckselt.

Die EP 1 614 342 offenbart eine landwirtschaftliche Arbeitsmaschine mit einer Klopfsensoranordnung, wobei die Klopfsensoren zum gegenseitigen Eichen verwendet werden können.

Die Schneidmesser nutzen sich im Betrieb ab. Daher werden diese wiederholt nachgeschliffen, um einerseits eine gleichbleibende Schnittqualität zu erzielen, andererseits die Schnittkräfte und damit die für das Häckseln aufzuwendende Antriebsenergie gering zu halten. Bei jedem Schleifvorgang wird mit der Schärfung der abgestumpften Schnittkanten Material an den Schneidmessern abgetragen. Dies führt zu einem veränderten Abstand zwischen den Schnittkanten der Schneidmesser und der Gegenschneide. Der Häckselprozess wird dadurch beeinträchtigt.

Ein präziser und energieeffizienter Häckselprozess lässt sich nur durchführen, wenn neben einer geeigneten Messerschärfe auch ein bestimmter Abstand zwischen Gegenschneide und Schneidwerkzeug besteht. Ein zu großer Abstand führt zu teils unvollständigem Schnitt des eintretenden Guts und kann die aufzubringenden Schnittkräfte erhöhen. Ein zu geringer Abstand birgt insbesondere die Gefahr, dass sich Schneidmesser und Gegenschneide berühren, was zu Materialschäden und sogar zu gefährlichem Ablösen von Material und/oder vollständigen Maschinenelementen führen kann. Der Gegenschneide ist daher eine Verstelleinrichtung zugeordnet, die eine Anpassung der Abstandslage der Gegenschneide ermöglicht.

Für eine genaue Einstellung der Gegenschneide mittels der Verstelleinrichtung - insbesondere nach einem Schleifvorgang - ist es erforderlich, die Abstandslage zwischen Gegenschneide und Schneidwerkzeug präzise erkennen zu können. Dies stellt unter anderem aufgrund des geringen Abstands, der hohen Drehzahl und möglicher mechanischer Verspannungen in der Anordnung von Schneidwerkzeug und Gegenschneide technisch eine Herausforderung dar.

Bislang erfolgt die Ermittlung des Abstands zwischen Gegenschneide und Schneidwerkzeug beispielsweise durch Heranfahren der Gegenschneide auf das rotierende Schneidwerkzeug zu bis eine Berührung stattfindet, was sich anhand von sogenanntem "Klopfen" erkennen lässt, d.h. periodischen Kontaktgeräuschen, verursacht durch das Anschlagen der Schneidmesser an die Gegenschneide. Aus dieser durch Klopfen erkannten "Kontaktposition" wird die Gegenschneide anschließend um ein bekanntes Maß von dem Schneidwerkzeug weg verfahren, um so einen definierten Abstand einzustellen.

Die sich beim Heranfahren ergebenden Kontaktgeräusche sind zwar hörbar, jedoch unterliegt deren Bewertung durch einen Bediener zu sehr subjektiven Einflüssen. Zur Erkennung wird daher auf einen sogenannten "Klopfsensor" zurückgegriffen, bei dem es sich um einen (oder mehrere) an der Gegenschneide angebrachten Schwingungssensor handelt, der ab Überschreiten eines Schwellwertes "Klopfen" detektiert. Das Klopfsignal gibt also an, dass das Schneidwerkzeug die Gegenschneide kontaktiert, woraus auf einen minimalen Gegenschneidenabstand geschlossen wird.

An dieser Art der Abstandsermittlung ist nachteilig, dass nur eine Berührung der Gegenschneide am Schneidwerkzeug als solche erkannt wird. Aufgrund von ungleichem Verschleiß der Schneidmesser bzw. Gegenschneide, aufgrund von Verspannungen der Gegenschneide, aufgrund eines seitlich unterschiedlichen Heranfahrens der Gegenschneide an das Schneidwerkzeug - oder aus sonstigen Gründen - passiert es jedoch häufig, dass die Gegenschneide gegenüber dem Schneidwerkzeug nicht parallel ausgerichtet ist. Bei einem Heranfahren an das Schneidwerkzeug kommt es dann zu einem nur partiellen Kontakt, dessen Lage nicht feststellbar ist. Ein Abweichen von der für den Häckselprozess anzustrebenden parallelen Ausrichtung der Gegenschneide kann damit nicht erkannt werden. In der Folge ergibt sich eine ungenaue Einstellung der Abstandslage.

Um dennoch eine parallele Ausrichtung des Gegenschneide gegenüber dem Schneidwerkzeug zu erreichen, wird in der EP 0 291 216 A1 vorgeschlagen, unterschiedlichen Enden der Gegenschneide zugeordnete Verstellmotoren einzeln anzusteuern, um aus dem bei Betätigung nur eines Motors entstehenden Klopfsignal zumindest auf die Seite des Kontakts schließen zu können. Eine tatsächliche Seitenerkennung des Kontakts wird damit nicht vorgenommen, in der Praxis kann es - insbesondere bei mechanischen Verspannungen der Gegenschneide - zu Fehlerkennungen kommen. Zudem erfordert das einzelne Ansteuern der Verstellmotoren relativ viel Zeit.

Es ist daher eine Aufgabe der vorliegenden Erfindung, ein Verfahren anzugeben, das eine verbesserte Zustandserkennung der Schneideinrichtung ermöglicht. Insbesondere soll mit dem Verfahren eine schnellere und genauere Erkennung der Abstandslage der Gegenschneide gegenüber dem Schneidwerkzeug erzielt werden. Weiterhin soll eine entsprechende Vorrichtung angegeben werden.

Die genannte Aufgabe wird gelöst durch ein Verfahren gemäß Anspruch 1. Dieses zeichnet sich dadurch aus, dass der Gegenschneide zumindest zwei voneinander beabstandete Sensoren zur Erfassung von Schwingungen zugeordnet sind, die das Schneidwerkzeug bei Kontakt mit der Gegenschneide verursacht, wobei von den Sensoren erzeugte Signale an eine gemeinsame Signalanalyseeinrichtung übermittelt werden, die durch Vergleich der Signale einen Zustand der Schneideinrichtung ermittelt.

Dem erfindungsgemäßen Verfahren liegt die Erkenntnis zugrunde, dass sich durch gegenseitigen Kontakt von Schneidwerkzeug und Gegenschneide verursachte Schwingungen - die über die Luft als Kontaktgeräusche wahrnehmbar sind - in der Gegenschneide in Form von Körperschallschwingungen mit einer bestimmten, insbesondere materialabhängigen Geschwindigkeit ausbreiten. Durch die erfindungsgemäß vorgesehene beabstandete Anordnung zumindest zweier Sensoren an der Gegenschneide können durch Vergleich der durch unterschiedlich platzierte Sensoren empfangenen Signale (die jeweils ein mit dem Sensor erfasstes "Kontaktgeräusch" repräsentieren) in einer gemeinsamen Signalanalyseeinrichtung Zustandsinformationen über die Schneideinrichtung ermittelt werden. Insbesondere kann eine von der Signalanalyseeinrichtung vorgenommene Schalllaufzeitmessung bzw. eine daraus ermittelte Laufzeitdifferenz - bei bekannter Anordnung der Sensoren - eine tatsächliche Ortung der Schallursache, also der Kontaktstelle zwischen Gegenschneide und Schneideinrichtung, ermöglichen. Ein zeitaufwändiges wechselseitiges Heranfahren an die Gegenschneide entfällt. Daneben ist es denkbar, dass die Signalanalyseeinrichtung anhand des Vergleichs der empfangenen Signale Schärfezustände des Schneidwerkzeugs und/oder der Gegenschneide ermittelt.

In einer bevorzugten Ausführungsform handelt es sich bei den Sensoren um Körperschallaufnehmer, die an gegenüberliegenden Endbereichen der Gegenschneide angeordnet sind. Dadurch ist auf einfache Weise eine Zuordnung der Sensoren zu den Seiten der Gegenschneide gegeben, wobei durch Kenntnis der genauen Position der Sensoren anhand eines zeitlichen Vergleichs der empfangenen Signale eine Ortung der Schallursache möglich ist. Im einfachsten Fall leitet die Signalanalyseeinrichtung schlicht aus dem Vorhandensein des Signals nur eines Sensors eine Information über den Schwingungsursprung auf der Gegenschneide ab.

Alternativ oder ergänzend leitet die Signalanalyseeinrichtung aus den Zeitpunkten des Eintreffens von Signalen unterschiedlicher Sensoren eine Information über den Ursprung der Schwingung auf der Gegenschneide ab.

Bei einer solchen Information kann es sich um eine bloße Seitenzuordnung handeln oder es könnte durch Berechnung quantitativ eine Position ermittelt werden.

Gemäß einer vorteilhaften Weiterbildung der Erfindung bestimmt die Signalanalyseeinrichtung einen zeitlichen Versatz im Sinne einer Laufzeitdifferenz zwischen den durch dieselbe Schwingungsursache ausgelösten Signalen unterschiedlicher Sensoren. Hierzu handelt es sich bei der Signalanalyseeinrichtung vorteilhaft um einen hochfrequent arbeitenden Mikrocontroller, der die Signale der Sensoren mit hoher Abtastrate analysieren und/oder filtern kann.

Bevorzugt führt die Signalanalyseeinrichtung aus der ermittelten Laufzeitdifferenz eine quantitative Lagebestimmung des Ursprungs der Schwingung auf der Gegenschneide durch. Dazu könnte zunächst die Schallaufzeit vom Ursprung der Körperschallschwingung zum jeweiligen Sensor anhand der gemessenen Laufzeitdifferenz und einer vorgegebenen maximal möglichen Laufzeit errechnet werden. Aus der so errechneten Laufzeit und einer bekannten Schallgeschwindigkeit könnte dann der Abstand zwischen dem Ursprung der Schwingung und dem Sensor errechnet werden.

Gemäß einer weiteren Ausgestaltung der Erfindung leitet die Signalanalyseeinrichtung weiterhin aus der Dauer einer empfangenen Schwingung eine Information über die Ausrichtung des Schneidwerkzeugs gegenüber der Gegenschneide ab. Dem liegt die Erkenntnis zugrunde, dass über die Breite die Gegenschneide kontaktierende Messer längere Kontaktgeräusche verursachen als nur punktuell die Gegenschneide kontaktierende Messer. Demnach lässt sich auch aus der Dauer empfangener Schwingungen auf die Ausrichtung des Schneidwerkzeugs gegenüber der Gegenschneide schließen.

In konstruktiver Hinsicht ist vorteilhaft der Gegenschneide eine Verstelleinrichtung zur Einstellung der Abstandslage der Gegenschneide zugeordnet, welche von einer - vorzugsweise mit der Signalanalyseeinrichtung gekoppelten - Steuereinrichtung angesteuert wird. Die Verstelleinrichtung verfügt dabei zweckmäßigerweise über eine entsprechende Aktorik, mittels welcher sich die Gegenschneide gegenüber dem Schneidwerkzeug im Abstand verstellen und ausrichten lässt.

Eine solche Verstelleinrichtung umfasst bevorzugt zwei Aktoren, die jeweils einer Seite der Gegenschneide zugeordnet, mit dieser gekoppelt und separat mittels der Steuereinrichtung ansteuerbar sind, so dass die Abstandslage der Gegenschneide seitenweise einstellbar ist.

Eine vorteilhafte Weiterbildung der Erfindung sieht vor, dass die Steuereinrichtung bei der Einstellung einer gewünschten Abstandslage der Gegenschneide einen von der Signalanalyseeinrichtung abgeleiteten Zustand der Schneideinrichtung berücksichtigt. Durch eine solche Berücksichtigung kann insbesondere eine parallele Ausrichtung der Gegenschneide gegenüber dem Schneidwerkzeug durchgeführt werden.

Das beschriebene Verfahren lässt sich grundsätzlich an unterschiedlichen Schneideinrichtungen mit rotierendem Schneidwerkzeug einsetzen. Bevorzugt handelt es sich bei dem Schneidwerkzeug jedoch um eine mit einer Vielzahl von Messern bestückte Häckseltrommel, wie insbesondere an einem selbstfahrenden Feldhäcksler.

Vorteilhaft ordnet die Signalanalyseeinrichtung die von den Sensoren empfangenen Signale einzelnen Messern der Häckseltrommel zu. Eine Erkennung von Schäden oder Fehlpositionierungen einzelner Messer wäre dadurch möglich.

Bevorzugt könnte dazu die Signalanalyseeinrichtung mit einem Drehstellungssensor verbunden sein, der eine Drehstellung des Schneidwerkzeugs an die Signalanalyseeinrichtung übermittelt. Ein solcher Drehstellungssensor könnte kontinuierlich oder periodisch die Umdrehung des Schneidwerkzeugs erfassen, so dass die Signalanalyseeinrichtung - beispielsweise anhand eines Synchronisationsimpulses - eine Zuordnung empfangener Signale zu einzelnen Messern vornehmen kann.

Vorzugsweise ist der Schneideinrichtung eine Schleifeinrichtung für die Messer zugeordnet ist, wobei die Signalanalyseeinrichtung die Sensorsignale einzelner Messer miteinander vergleicht, um daraus eine Information darüber abzuleiten, ob ein Schleifvorgang auszulösen oder abzubrechen ist. Bei einem solchen Vergleich könnten beispielsweise Amplitudenunterschiede, Signallängen, die Anzahl von Messerkontakten bei einer Umdrehung berücksichtigt werden. Unterschiedliche Messergeräusche könnten vorteilhaft als Indikator dafür dienen, einen Schleifvorgang auszulösen, während das Erreichen gleicher Messerkontaktgeräusche bei einem Schleifvorgang vorteilhaft als Indikator dafür herangezogen werden könnte, den erfolgreich durchgeführten Schleifvorgang abzubrechen.

Eine vorteilhafte Weiterbildung der Erfindung sieht vor, dass die Signalanalyseeinrichtung einen Verschleißzustand der Gegenschneide dadurch erkennt, dass bei den durch eine Vielzahl von Messern verursachten Schwingungen zu einem gleichen Zeitpunkt eine Unterbrechung im übermittelten Signal besteht. Insbesondere wenn diese Signalunterbrechung durch Schleifen nicht behebbar ist, liegt ein Verschleiß der Gegenschneide vor.

Die eingangs genannte Aufgabe wird weiterhin gelöst durch eine Vorrichtung gemäß Anspruch 14. Bevorzugt verfügt dabei die Gegenschneide und/oder daran angrenzende Maschinenelemente über Mittel zur Dämpfung von Körperschallschwingungen in der Gegenschneide. Eine solche Dämpfung dient dazu, dass Körperschallschwingungen in der Gegenschneide nur in möglichst begrenztem Ausmaß reflektiert werden. Idealerweise sorgen die Dämpfer dafür, dass die Sensoren nicht von störenden Nachschwingungen beeinträchtigt werden.

Eine vorteilhafte Weiterbildung der Vorrichtung verfügt über eine Ausgabeeinheit, mittels welcher der ermittelte Zustand der Schneideinrichtung an einen Bediener der Schneideinrichtung ausgebbar ist. Eine solche Ausgabeeinheit kann beispielsweise optisch oder akustisch arbeiten und könnte zur bequemen Zugänglichkeit im Bereich des Arbeitsplatzes eines Maschinenbedieners, insbesondere in der Fahrerkabine eines Feldhäckslers, angeordnet sein.

Anhand der nachfolgenden Figuren werden weitere vorteilhafte Aspekte der Erfindung beschrieben. Dabei zeigen:
- Fig. 1: einen selbstfahrenden Feldhäcksler in schematischer Seitenansicht,
- Fig. 2: ein Häckselaggregat in schematischer Seitenansicht,
- Fig. 3: eine erfindungsgemäße Vorrichtung einschließlich des Häckselaggregats aus Fig. 2 in schematischer Ansicht.

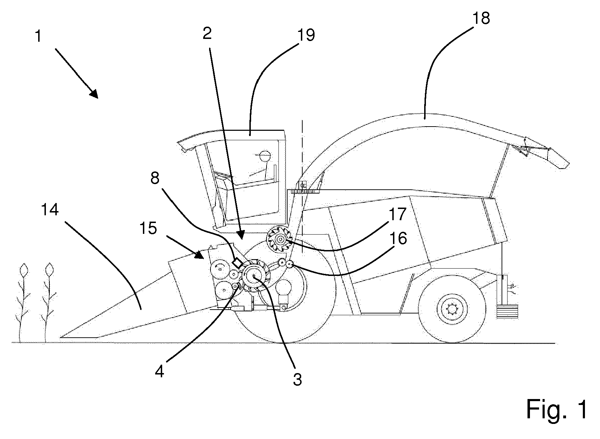

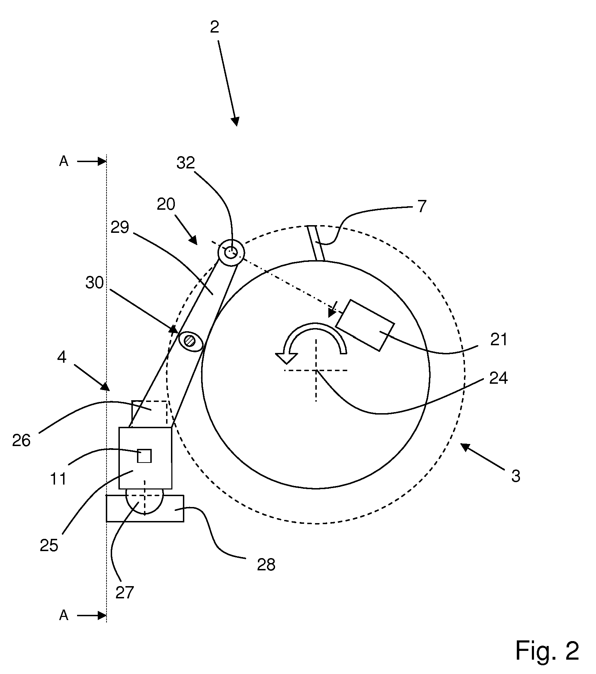

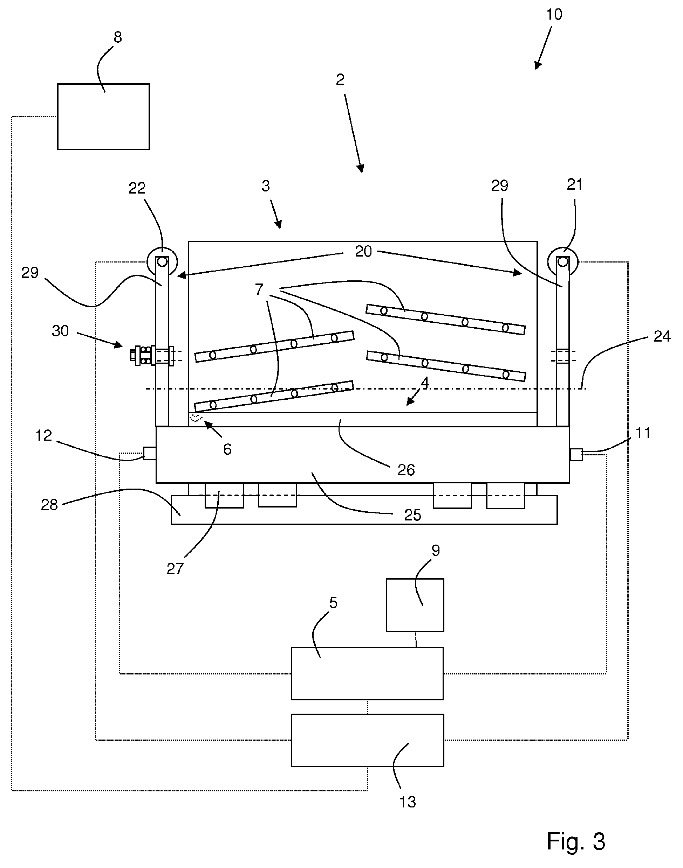

Fig. 1 zeigt in schematischer Seitenansicht einen selbstfahrenden Feldhäcksler 1. Der Feldhäcksler 1 ist unter anderem mit Arbeitsaggregaten wie einem Vorsatzgerät 14, einem Einzugsaggregat 15, einem Häckselaggregat 2 mit zugeordneter Schleifeinrichtung 8, einer Konditioniereinrichtung 16, einem Nachbeschleuniger 17, einer Überladeeinrichtung 18 und einer Fahrerkabine 19 zur Aufnahme einer Bedienperson ausgestattet. Im Erntebetrieb fährt der Feldhäcksler 1 über ein Feld und schneidet mittels des Vorsatzgeräts 14 Pflanzen vom Feld, um diese über das Einzugsaggregat 15 dem Häckselaggregat 2 zuzuführen. Das Häckselaggregat 2 umfasst eine mit einer Vielzahl von Messern bestückte Häckseltrommel 3, die gegenüber einer ruhenden Gegenschneide 4 rotiert. Der Aufbau und die Funktionsweise des Häckselaggregats 2 werden im Zusammenhang mit den Fig. 2 und 3 nachfolgend näher erläutert.

Beim Durchlaufen des Häckselaggregats 2 wird das Erntegut zerkleinert, um anschließend nach Bearbeitung in der Konditioniereinrichtung 16 und nach Beschleunigung im Nachbeschleuniger 17 über einen hinter der Fahrerkabine 19 aufsteigenden Förderschacht und die sich daran anschließende Überladeeinrichtung 18 aus dem Feldhäcksler 1 ausgeworfen zu werden.

Die Häckseltrommel 3 dreht sich im Erntebetrieb gemäß Darstellung in Fig. 1 entgegen dem Uhrzeigersinn, um in Zusammenwirkung mit der ruhenden Gegenschneide 4 Erntegut zu häckseln, das vom Einzugsaggregat 15 als vorgepresste Erntegutmatte in Richtung des Häckselaggregats 2 gefördert wird.

Da sich die Messer (in Fig. 1 nicht näher bezeichnet) im Erntebetrieb abnutzen, sind diese bedarfsweise nachzuschleifen, wozu die Schleifeinrichtung 8 an den stumpf gewordenen Messerkanten Material abträgt. Aufgrund des Materialabtrags besteht nach dem Schleifvorgang ein veränderter Abstand zwischen der Gegenschneide 4 und der für den Häckselprozess wirksamen Kante der Messer. Die Erfindung bezieht sich auf ein Verfahren bzw. eine Vorrichtung zur verbesserten Zustandserkennung des Häckselaggregats 2, insbesondere zur verbesserten Erkennung der Abstandslage der Gegenschneide 4 gegenüber der Häckseltrommel 3. Weiterhin werden damit eine verbesserte Erkennung des Zustands der Messer und der Gegenschneide ermöglicht.

Fig. 2 zeigt ein Häckselaggregat 2 in schematischer Seitenansicht, das in einen Feldhäcksler 1 gemäß Fig. 1 eingebaut sein könnte. Das gezeigte Häckselaggregat 2 umfasst im Wesentlichen eine um eine Rotationsachse 24 drehbare Häckseltrommel 3 und eine der Häckseltrommel 3 gegenüber verstellbare Gegenschneide 4. Beispielhaft ist ein an der Häckseltrommel 3 befestigtes Schneidmesser 7 eingezeichnet, das einer Vielzahl weiterer umfangsmäßig verteilter (nicht eingezeichneter) Schneidmesser angehört. Bei Drehung der Häckseltrommel 3 um die Rotationsachse 24 überstreichen die Schneidmesser 7 den gestrichelt eingezeichneten äußeren Hüllkreis der Häckseltrommel 3. Der Radius dieses Hüllkreises wird durch den Schleifzustand der Schneidmesser 7 beeinflusst.

Die Gegenschneide 4 umfasst im Wesentlichen einen Gegenschneidenträger 25, auf den ein Gegenschneidbalken 26 montiert ist. Der Gegenschneidenträger 25 stützt sich über Gelenkköpfe 27 gegenüber einem ortsfesten (z.B. am Rahmen eines Feldhäckslers) Querträger 28 ab. Demnach ist die Gegenschneide 4 um eine zur Rotationsachse 24 parallele Gelenkachse schwenkbar, wobei sich durch Schwenken der Gegenschneide 4 die Abstandslage des Gegenschneidbalkens 26 gegenüber der Messertrommel 3 verändern lässt.

Wie vollständig in Fig. 3 zu sehen, die in schematischer Ansicht unter anderem das Häckselaggregat 2 gemäß der Linie A-A aus Fig. 2 von vorn zeigt, sind an dem Gegenschneidenträger 25 an dessen beiden seitlich gegenüberliegenden Endbereichen ein erster und ein zweiter Schwingungssensor 11 bzw. 12 angebracht. Da Fig. 2 eine Seitenansicht von links (in Bezug auf die Fahrtrichtung des Feldhäckslers) ist, zeigt diese nur den ersten, maschinenlinksseitigen Schwingungssensor 11.

In der Ansicht von Fig. 3 sind beispielhaft nur vier Schneidmesser 7 eingezeichnet, die einer Vielzahl weiterer umfangsmäßig verteilter (nicht eingezeichneter) Schneidmesser angehören. Der Darstellung ist jedenfalls zu entnehmen, dass die Schneidmesser 7 zweireihig in V-Anordnung an der Häckseltrommel 3 befestigt sind.

Fig. 2 und 3 zeigen, dass die Gegenschneide 4 an eine Verstelleinrichtung 20 gekoppelt ist, mittels welcher sich die Abstandslage der Gegenschneide 4 gegenüber der Häckseltrommel 3 verändern lässt. Die Verstelleinrichtung 20 umfasst zwei Aktoren in Form von elektrischen Stellmotoren 21, 22, die jeweils einer Seite der Gegenschneide 4 zugeordnet und über je einen Hebelarm 29 mit dieser gekoppelt sind. Dazu ist an beiden Enden des Gegenschneidenträgers 25 jeweils seitlich außerhalb der Häckseltrommel 3 ein Hebelarm 29 befestigt, der sich quer zur Rotationsachse 24 der Häckseltrommel 3 erstreckt. Jeder der Hebelarme 29 ist mit einer Reibbremse 30 ausgestattet. Dazu ist an jedem Hebelarm 29 ein Durchgang ausgebildet, der - wie in Fig. 2 ovalförmig angedeutet - größer ist als der Querschnitt eines sich durch diesen erstreckenden ortsfesten Bremsstifts. Der Hebelarm 29 ist daher innerhalb des durch den Durchgang vorgegebenen Spiels beweglich, um Verstellbewegungen der Gegenschneide 4 zu ermöglichen. Durch eine auf den Bremsstift aufgebrachte Federvorspannung (vgl. Fig. 3) wird das Bewegungsspiel des Hebelarms 29 gebremst.

Jeder der beidseitigen Hebelarme 29 lässt sich über ein Schraubgetriebe verstellen, das jeweils von einem ersten Stellmotor 21 bzw. zweiten Stellmotor 22 angetrieben wird. Dazu ist die Abtriebsachse der Motoren 21, 22 jeweils als Gewindespindel ausgeführt, die in eine am der Gegenschneide 4 abgewandten Ende des Hebelarms 29 gelagerte Spindelmutter 23 eingreift. Demnach lässt sich durch Ansteuern der Motoren 21, 22 die Abstandslage der Gegenschneide 4 gegenüber der Häckseltrommel 3 einstellen. Da die Motoren 21, 22 beider Seiten der Gegenschneide 4 mittels einer Steuereinrichtung 13 unabhängig voneinander ansteuerbar sind, ist - im Rahmen mechanischer Grenzen - eine freie Verstellung der Abstandslage der Gegenschneide 4 möglich, d.h. es ist neben dem Abstand auch die Ausrichtung der Gegenschneide 4 (deren Winkel gegenüber der Häckseltrommel 3) einstellbar.

Die Steuereinrichtung 13 ist weiterhin mit einer für sich bekannten, daher technisch nicht näher zu beschreibenden Schleifeinrichtung 8 für die Messer 7 verbunden, so dass die Steuereinrichtung 13 durch entsprechende Signalgebung Schleifvorgänge auslösen und beenden kann.

Die beiden Schwingungssensoren 11 und 12 sind über Signalleitungen mit einer Signalverarbeitungseinrichtung in Form eines digitalen Signalprozessors 5 verbunden. Es handelt sich hierbei um einen hochfrequent arbeitenden Mikrocontroller, der zur Filterung und Analyse von Eingangssignalen mit hoher Abtastrate geeignet ist. Insbesondere eignet sich der Signalprozessor 5 dazu, von den Schwingungssensoren 11, 12 eingehende Signale miteinander zu vergleichen, wobei insbesondere Laufzeitdifferenzen zwischen Signalen des ersten Sensors 11 gegenüber Signalen des zweiten Sensors 12 ermittelt werden können und/oder zeitlich aufeinanderfolgende Signale desselben Sensors 11, 12 miteinander verglichen werden können.

Die Arbeitsweise der in Fig. 3 dargestellten Vorrichtung lässt sich folgendermaßen beschreiben. Um für den Erntebetrieb - beispielsweise nach einem erfolgten Schleifvorgang - einen gewünschten Abstand zwischen Gegenschneide 4 und Häckseltrommel 3 einzustellen, aktiviert die Steuereinrichtung 13 - entweder automatisch oder vom Maschinenbediener manuell ausgelöst - die Stellmotoren 21, 22, um die Gegenschneide 4 an die rotierende Häckseltrommel 3 heranzufahren. Die Stellmotoren 21, 22 werden dazu bevorzugt gleichzeitig betrieben. Da sich der Abstand zwischen Gegenschneide 4 und Häckseltrommel 3 immer weiter verringert, stößt irgendwann der Gegenschneidbalken 26 der Gegenschneide 4 an zumindest eines (möglicherweise an mehrere oder sogar an sämtliche) der umlaufenden Messer 7 der Häckseltrommel 3 an. Der jeweilige Kontakt verursacht eine Schwingung in der Gegenschneide 4, deren Schwingungsursprung 6 in Fig. 3 durch zwei gestrichelte Bögen beispielhaft angedeutet ist. Im gezeigten Fall tritt der Kontakt an einem Bereich des Gegenschneidbalkens 26 auf, der dem zweiten Sensor 12 zugewandt ist (im Bild linksseitig).

Die durch den Kontakt verursachte Schwingung breitet sich vom Schwingungsursprung 6 ausgehend in der Gegenschneide 7 mit einer bestimmten Geschwindigkeit als Körperschallschwingung aus. Da der Schwingungsursprung 6 im gezeigten Fall örtlich sehr viel dichter am Sensor 12 als am Sensor 11 liegt, erfasst der Sensor 12 die Schwingung früher als der Sensor 11. Möglicherweise erfasst der Sensor 11 die Schwingung sogar überhaupt nicht, falls diese auf dem längeren Ausbreitungsweg nämlich bereits zu sehr abgedämpft worden ist.

Die gemeinsame Signalanalyseeinrichtung 5, welche zum Empfang von Signalen beider Sensoren 11, 12 bereitsteht, leitet beispielsweise aus dem Vorhandensein des Signals nur des Sensors 12 eine Information über den Ursprung der Schwingung auf der Gegenschneide 4 ab. Im einfachsten Fall trifft die Signalanalyseeinrichtung 5 also einfach eine Zuordnung der Schwingung zu einer der beiden Seiten der Gegenschneide 4, im gezeigten Fall also zur Seite des Sensors 12, wo das Vorhandensein einer Schwingung erfasst wird, da die Seite des Sensors 12 an die Häckseltrommel 3 anschlägt. Zur Korrektur der so ermittelten Schrägstellung der Gegenschneide 4 gegenüber der Häckseltrommel 3 kann die mit der Signalanalyseeinrichtung 5 verbundene Steuereinrichtung 13 nun die Stellmotoren 21, 22 so ansteuern, dass eine Parallelstellung der Gegenschneide 4 hergestellt wird. Dazu könnte beispielsweise der Motor 22 angehalten werden, während der Motor 21 so lange weiter verfährt, bis auch vom Sensor 11 ein Kontaktsignal empfangen wird. Der Empfang von Signalen beider Sensoren 11, 12 kann demnach als Indikator für eine Parallelstellung der Gegenschneide 4 gegenüber der Häckseltrommel 3 dienen.

Gemäß einer vorteilhaften Weiterbildung leitet die Signalanalyseeinrichtung 5 aus den Zeitpunkten des Eintreffens von Signalen der unterschiedlich angeordneten Sensoren 11, 12 eine Information über den Ursprung der Schwingung auf der Gegenschneide 4 ab. Bei geeigneter Auswertung kann so eine - über eine bloß qualitative Seitenzuordnung hinausgehende - quantitative Lagebestimmung des Schwingungsursprungs erfolgen. Dazu ermittelt die Signalanalyseeinrichtung 5 durch Vergleich der Signale einen zeitlichen Versatz im Sinne einer Laufzeitdifferenz zwischen den Signalen der beiden Sensoren 11, 12. Da die Positionen der Sensoren 11, 12 sowie die konstruktionsbedingte Schalllaufzeit in der Gegenschneide 4 bekannt sind, ist die Signalanalyseeinrichtung 5 in der Lage, aus der ermittelten Laufzeitdifferenz quantitativ die Lage des Schwingungsursprungs 6 auf der Gegenschneide 4 zu errechnen. Eine präzisere Ansteuerung der Stellmotoren 21, 22 zur schnellen und genauen Erreichung einer parallelen Abstandslage gegenüber der Häckseltrommel 3 ist dadurch möglich.

Abweichend vom gezeigten Beispiel könnte ein Schwingungsursprung in einem anderen Bereich der Gegenschneide 4 liegen. Würden beispielsweise Schwingungen im zentralen Bereich der Gegenschneide 4 verursacht, so träte die Schwingung an beiden Sensoren 11, 12 etwa gleichzeitig ein. Die an die Signalanalyseeinrichtung 5 übermittelten Signale wären in diesem Fall zeitgleich.

Alternativ oder ergänzend zu einem zeitlichen Vergleich des Eintreffens können die empfangenen Signale auch auf deren Dauer analysiert werden. Beispielsweise kann aus relativ langen Signalen, hervorgerufen durch die Schrägstellung der Messer 7 auf der Häckseltrommel 3, darauf geschlossen werden, dass ein Kontakt nicht nur in einem Punkt stattfindet, sondern dass sich Gegenschneide 4 und Häckselmesser 7 in einem breiteren Bereich kontaktieren.

Eine vorteilhafte Anwendungsmöglichkeit für die beschriebene Vorrichtung bzw. das beschriebene Verfahren ergibt sich weiterhin durch deren Einbindung in den Schleifvorgang. Dabei könnte die Signalanalyseeinrichtung 5 dazu genutzt werden, die von unterschiedlichen Messern 7 verursachten Kontaktsignale während der Rotation der Häckseltrommel 3 zunächst herausfiltern und dann untereinander vergleichen, um daraus auf den Messerzustand und/oder auf den Zustand der Gegenschneide zu schließen. Zur Erleichterung der Zuordnung von Kontaktsignalen zu einzelnen Messern 7 kann das Häckselaggregat 2 mit einem (nicht eingezeichneten) Drehstellungssensor verbunden sein, der eine Drehstellung der Häckseltrommel 3 an die Signalanalyseeinrichtung übermittelt.

Werden beispielsweise während einer Häckselpause unterschiedliche Signale (Amplitudenhöhe, Signallänge) an den Messern 7 erkannt, so kann dies als Indikator dafür gelten, dass ein Schleifvorgang erforderlich ist, da offenbar einzelne Messer 7 voneinander abweichende Geometrien aufweisen. Ein solcher Schleifvorgang könnte dann beispielsweise automatisiert ausgelöst werden, indem die Steuerungseinrichtung 13 die Schleifeinrichtung 8 aktiviert.

Werden wiederum nach einem Schleifvorgang annähernd die gleichen Signale (vergleichbare Amplitudenhöhe, Signallänge) an unterschiedlichen Messern 7 erkannt, so ist dies ein Indikator dafür, dass ein Schleifvorgang beendet werden kann, da nun die Messer 7 wieder eine gleiche Geometrie aufweisen.

Wird hingegen nach einem Schleifvorgang bei allen Messerkontakten zum gleichen Zeitpunkt eine Signalunterbrechung gemessen, die sich auch durch weiteres Schleifen nicht beheben lässt, so ist dies ein Indikator dafür, dass die Gegenschneide 4 selbst verschlissen ist.

Ganz allgemein kann eine mit dem Signalprozessor 5 verbundene Ausgabeeinheit 9 vorgesehen sein, die einem Maschinenbediener in akustischer und/oder optischer Form vom Signalprozessor 5 ermittelte Zustände aller Art ausgibt.

### Bezugszeichenliste

- 1: Feldhäcksler
- 2: Häckselaggregat
- 3: Häckseltrommel
- 4: Gegenschneide
- 5: digitaler Signalprozessor
- 6: Schwingungsursprung
- 7: Messer
- 8: Schleifeinrichtung
- 9: Ausgabeeinheit
- 10: Vorrichtung
- 11: erster Sensor
- 12: zweiter Sensor
- 13: Steuereinrichtung
- 14: Vorsatzgerät
- 15: Einzugsaggregat
- 16: Konditioniereinrichtung
- 17: Nachbeschleuniger
- 18: Überladeeinrichtung
- 19: Fahrerkabine
- 20: Verstelleinrichtung
- 21: erster Stellmotor
- 22: zweiter Stellmotor
- 23: Spindelmutter
- 24: Rotationsachse
- 25: Gegenschneidenträger
- 26: Gegenschneidbalken
- 27: Gelenkkopf
- 28: Querträger
- 29: Hebelarm
- 30: Bremse

## Patentansprüche

1. Verfahren zur Zustandserkennung einer Schneideinrichtung (2) für landwirtschaftliches Erntegut, wobei die Schneideinrichtung (2) ein gegenüber einer Gegenschneide (4) in Rotation versetzbares Schneidwerkzeug (3) umfasst und wobei die Abstandslage der Gegenschneide (4) gegenüber dem Schneidwerkzeug (3) veränderlich ist,
**dadurch gekennzeichnet, dass** der Gegenschneide (4) zumindest zwei voneinander beabstandete Sensoren (11, 12) zur Erfassung von Schwingungen zugeordnet sind, die das Schneidwerkzeug (3) bei Kontakt mit der Gegenschneide (4) verursacht, wobei von den Sensoren (11, 12) erzeugte Signale an eine gemeinsame Signalanalyseeinrichtung (5) übermittelt werden, die durch Vergleich der Signale einen Zustand der Schneideinrichtung (2) ermittelt.

2. Verfahren nach Anspruch 1, **dadurch gekennzeichnet, dass** die Signalanalyseeinrichtung (5) aus dem Vorhandensein des Signals nur eines Sensors (11, 12) und/oder aus den Zeitpunkten des Eintreffens von Signalen unterschiedlicher Sensoren (11, 12) eine Information über den Ursprung (6) der Schwingung auf der Gegenschneide (4) ableitet.

3. Verfahren nach Anspruch 1 oder 2, **dadurch gekennzeichnet, dass** die Signalanalyseeinrichtung (5) einen zeitlichen Versatz im Sinne einer Laufzeitdifferenz zwischen den durch dieselbe Schwingungsursache ausgelösten Signalen unterschiedlicher Sensoren (11, 12) bestimmt.

4. Verfahren nach Anspruch 3, **dadurch gekennzeichnet, dass** die Signalanalyseeinrichtung (5) aus der ermittelten Laufzeitdifferenz eine quantitative Lagebestimmung des Ursprungs (6) der Schwingung auf der Gegenschneide (4) durchführt.

5. Verfahren nach einem der vorigen Ansprüche, **dadurch gekennzeichnet, dass** die Signalanalyseeinrichtung (5) aus der Dauer einer Schwingung eine Information über die Ausrichtung des Schneidwerkzeugs (3) gegenüber der Gegenschneide (4) ableitet.

6. Verfahren nach einem der vorigen Ansprüche, **dadurch gekennzeichnet, dass** der Gegenschneide (4) eine Verstelleinrichtung (20) zur Einstellung der Abstandslage der Gegenschneide (4) zugeordnet ist, welche von einer Steuereinrichtung (13) angesteuert wird.

7. Verfahren nach Anspruch 6, **dadurch gekennzeichnet, dass** die Verstelleinrichtung (20) zwei Aktoren (21, 22) umfasst, die jeweils einer Seite der Gegenschneide (4) zugeordnet, mit dieser gekoppelt und separat mittels der Steuereinrichtung (13) ansteuerbar sind, so dass die Abstandslage der Gegenschneide (4) seitenweise einstellbar ist.

8. Verfahren nach Anspruch 6 oder 7, **dadurch gekennzeichnet, dass** die Steuereinrichtung (13) bei der Einstellung einer gewünschten Abstandslage der Gegenschneide (4) einen von der Signalanalyseeinrichtung (5) abgeleiteten Zustand der Schneideinrichtung (2) berücksichtigt.

9. Verfahren nach einem der vorigen Ansprüche, **dadurch gekennzeichnet, dass** es sich bei dem Schneidwerkzeug (3) um eine mit einer Vielzahl von Messern (7) bestückte Häckseltrommel handelt.

10. Verfahren nach Anspruch 9, **dadurch gekennzeichnet, dass** die Signalanalyseeinrichtung (5) die von den Sensoren (11, 12) empfangenen Signale einzelnen Messern (7) der Häckseltrommel (3) zuordnet.

11. Verfahren nach einem der vorigen Ansprüche, **dadurch gekennzeichnet, dass** die Signalanalyseeinrichtung (5) mit einem Drehstellungssensor verbunden ist, der eine Drehstellung des Schneidwerkzeugs (3) an die Signalanalyseeinrichtung (5) übermittelt.

12. Verfahren nach einem der Ansprüche 9 bis 11, **dadurch gekennzeichnet, dass** der Schneideinrichtung (2) eine Schleifeinrichtung (8) für die Messer (7) zugeordnet ist, wobei die Signalanalyseeinrichtung (5) die Sensorsignale einzelner Messer (7) miteinander vergleicht, um daraus eine Information darüber abzuleiten, ob ein Schleifvorgang auszulösen oder abzubrechen ist.

13. Verfahren nach einem der Ansprüche 9 bis 11, **dadurch gekennzeichnet, dass** die Signalanalyseeinrichtung (5) einen Verschleißzustand der Gegenschneide (4) dadurch erkennt, dass bei den durch eine Vielzahl von Messern (7) verursachten Schwingungen zu einem gleichen Zeitpunkt eine Unterbrechung im übermittelten Signal besteht.

14. Vorrichtung (10) zur Zustandserkennung einer Schneideinrichtung (2) für landwirtschaftliches Erntegut, insbesondere unter Anwendung eines Verfahrens gemäß einem der vorigen Ansprüche, wobei die Schneideinrichtung (2) ein gegenüber einer Gegenschneide (4) in Rotation versetzbares Schneidwerkzeug (3) umfasst und wobei die Abstandslage der Gegenschneide (4) gegenüber dem Schneidwerkzeug (3) veränderlich ist,
**dadurch gekennzeichnet, dass** der Gegenschneide (4) zumindest zwei voneinander beabstandete Sensoren (11, 12) zur Erfassung von Schwingungen zugeordnet sind, die das Schneidwerkzeug (3) bei Kontakt mit der Gegenschneide (4) verursacht, wobei eine zum Empfang der Signale der Sensoren (11, 12) betreibbare Signalanalyseeinrichtung (5) vorgesehen ist, die weiterhin betreibbar ist, die Signale miteinander zu vergleichen, um daraus einen Zustand der Schneideinrichtung (2) abzuleiten.

15. Vorrichtung nach Anspruch 14, **dadurch gekennzeichnet, dass** die Gegenschneide (4) und/oder daran angrenzende Maschinenelemente über Mittel zur Dämpfung von Körperschallschwingungen in der Gegenschneide (4) verfügen.

16. Vorrichtung nach Anspruch 14 oder 15, **gekennzeichnet durch** eine Ausgabeeinheit (9), mittels welcher der ermittelte Zustand der Schneideinrichtung (2) an einen Bediener der Schneideinrichtung (2) ausgebbar ist.

## Claims

1. A method of detecting the state of a cutting device (2) for agricultural crop material, wherein the cutting device (2) includes a cutting tool (3) which can be caused to rotate with respect to a counterpart cutting member (4) and wherein the spacing position of the counterpart cutting member (4) with respect to the cutting tool (4) is variable,
**characterised in that** associated with the counterpart cutting member (4) are at least two mutually spaced sensors (11, 12) for detecting vibrations which the cutting tool (3) causes upon contact with the counterpart cutting member (4), wherein signals produced by the sensors (11, 12) are transmitted to a common signal analysis device (5) which by comparison of the signals ascertains a state of the cutting device (2).

2. A method according to claim 1 **characterised in that** the signal analysis device (5) derives information about the origin (6) of the vibration on the counterpart cutting member (4) from the presence of the signal of only one sensor (11, 12) and/or from the times of the input of signals from different sensors (11, 12).

3. A method according to claim 1 or claim 2 **characterised in that** the signal analysis device (5) determines a time displacement in the sense of a transit time difference between the signals of different sensors (11, 12), that are triggered by the same vibration cause.

4. A method according to claim 3 **characterised in that** the signal analysis device (5) performs quantitative position determination of the origin (6) of the vibration on the counterpart cutting member (4) from the ascertained transit time difference.

5. A method according to one of the preceding claims **characterised in that** the signal analysis device (5) derives information about the orientation of the cutting tool (3) with respect to the counterpart cutting member (4) from the duration of a vibration.

6. A method according to one of the preceding claims **characterised in that** associated with the counterpart cutting member (4) is an adjusting device (20) for adjusting the spacing position of the counterpart cutting member (4), that is actuated by a control device (13).

7. A method according to claim 6 **characterised in that** the adjusting device (20) includes two actuators (21, 22) which are respectively associated with a side of the counterpart cutting member (4), are coupled thereto and are actuable separately by means of the control device (13) so that the spacing position of the counterpart cutting member (4) is adjustable in side-wise relationship.

8. A method according to claim 6 or claim 7 **characterised in that** upon setting a desired spacing position of the counterpart cutting member (4) the control device (13) takes account of a state of the cutting device (2), that is derived from the signal analysis device (5).

9. A method according to one of the preceding claims **characterised in that** the cutting tool (3) is a chopping drum equipped with a plurality of blades (7).

10. A method according to claim 9 **characterised in that** the signal analysis device (5) associates the signals received from the sensors (11, 12) with individual blades (7) of the chopping drum (3).

11. A method according to one of the preceding claims **characterised in that** the signal analysis device (5) is connected to a rotational position sensor which transmits a rotational position of the cutting tool (3) to the signal analysis device (5).

12. A method according to one of claims 9 to 11 **characterised in that** a grinding device (8) for the blades (7) is associated with the cutting device (2), wherein the signal analysis device (5) compares the sensor signals of individual blades (7) to each other to derive therefrom information about whether a grinding operation is to be triggered or terminated.

13. A method according to one of claims 9 to 11 **characterised in that** the signal analysis device (5) detects a wear state of the counterpart cutting member (4) by virtue of the fact that with the vibrations caused by a plurality of blades (7) at an identical moment in time there is an interruption in the transmitted signal.

14. Apparatus (10) for detecting the state of a cutting device (2) for agricultural crop material, in particular using a method according to one of the preceding claims, wherein the cutting device (2) includes a cutting tool (3) which can be caused to rotate with respect to a counterpart cutting member (4) and wherein the spacing position of the counterpart cutting member (4) with respect to the cutting tool (4) is variable,
**characterised in that** associated with the counterpart cutting member (4) are at least two mutually spaced sensors (11, 12) for detecting vibrations which the cutting tool (3) causes upon contact with the counterpart cutting member (4), wherein there is provided a signal analysis device (5) which is operable to receive the signals of the sensors (11, 12) and which is further operable to compare the signals together to derive therefrom a state of the cutting device (2).

15. Apparatus according to claim 14 **characterised in that** the counterpart cutting member (4) and/or machine elements adjoining same have means for damping structure-borne sound vibrations in the counterpart cutting member (4).

16. Apparatus according to claim 14 or claim 15 **characterised by** an output unit (9) by means of which the ascertained state of the cutting device (2) can be output to an operator of the cutting device (2).

## Revendications

1. Procédé de détection de l'état d'un dispositif de coupe (2) pour un produit de récolte agricole, le dispositif de coupe (2) comprenant un outil de coupe (3) pouvant être mis en rotation par rapport à un contre-couteau (4) et la position d'écartement du contre-couteau (4) par rapport à l'outil de coupe (3) étant variable, **caractérisé en ce qu'**au contre-couteau (4) sont associés au moins deux capteurs (11, 12) espacés l'un de l'autre pour détecter les vibrations que l'outil de coupe (3) provoque lors du contact avec le contre-couteau (4), les signaux produits par les capteurs (11, 12) étant transmis à un dispositif d'analyse de signaux (5) commun qui détermine un état du dispositif de coupe (2) par comparaison des signaux.

2. Procédé selon la revendication 1, **caractérisé en ce que** le dispositif d'analyse de signaux (5) déduit de la présence du signal d'un seul capteur (11, 12) et/ou des instants de réception des signaux de capteurs (11, 12) différents une information sur l'origine (6) de la vibration sur le contre-couteau (4).

3. Procédé selon la revendication 1 ou la revendication 2, **caractérisé en ce que** le dispositif d'analyse de signaux (5) détermine un décalage temporel au sens d'une différence de temps de parcours entre les signaux de capteurs (11, 12) différents déclenchés par la même cause de vibration.

4. Procédé selon la revendication 3, **caractérisé en ce que** le dispositif d'analyse de signaux (5) effectue à partir de la différence de temps de parcours déterminée une détermination de position quantitative de l'origine (6) de la vibration sur le contre-couteau (4).

5. Procédé selon l'une des revendications précédentes, **caractérisé en ce que** le dispositif d'analyse de signaux (5) déduit de la durée d'une vibration une information sur l'orientation de l'outil de coupe (3) par rapport au contre-couteau (4).

6. Procédé selon l'une des revendications précédentes, **caractérisé en ce qu'**au contre-couteau (4) est associé un dispositif de réglage (20) pour régler la position d'écartement du contre-couteau (4), lequel est commandé par un dispositif de commande (13).

7. Procédé selon la revendication 6, **caractérisé en ce que** le dispositif de réglage (20) comprend deux actionneurs (21, 22) dont chacun est associé à un côté du contre-couteau (4), est couplé à celui-ci et peut être commandé séparément au moyen du dispositif de commande (13), de sorte que la position d'écartement du contre-couteau (4) est réglable côté par côté.

8. Procédé selon la revendication 6 ou la revendication 7, **caractérisé en ce que**, lors du réglage d'une position d'écartement souhaitée du contre-couteau (4), le dispositif de commande (13) tient compte d'un état du dispositif de coupe (2) déduit par le dispositif d'analyse de signaux (5).

9. Procédé selon l'une des revendications précédentes, **caractérisé en ce que** l'outil de coupe (3) est un tambour hacheur équipé d'une pluralité de couteaux (7).

10. Procédé selon la revendication 9, **caractérisé en ce que** le dispositif d'analyse de signaux (5) associe les signaux reçus des capteurs (11, 12) à des couteaux (7) individuels du tambour hacheur (3).

11. Procédé selon l'une des revendications précédentes, **caractérisé en ce que** le dispositif d'analyse de signaux (5) est relié à un capteur de position de rotation qui transmet une position de rotation de l'outil de coupe (3) au dispositif d'analyse de signaux (5).

12. Procédé selon l'une des revendications 9 à 11, **caractérisé en ce qu'**au dispositif de coupe (2) est associé un dispositif d'affûtage (8) pour les couteaux (7), le dispositif d'analyse de signaux (5) comparant entre eux les signaux des capteurs de couteaux (7) individuels pour en déduire une information permettant de savoir si une opération d'affûtage doit être déclenchée ou interrompue.

13. Procédé selon l'une des revendications 9 à 11, **caractérisé en ce que** le dispositif d'analyse de signaux (5) détecte un état d'usure du contre-couteau (4) par le fait que, lors des vibrations provoquées par une pluralité de couteaux (7), il existe au même instant une interruption dans le signal transmis.

14. Procédé (10) de détection de l'état d'un dispositif de coupe (2) pour un produit de récolte agricole, en particulier en mettant en oeuvre un procédé selon l'une des revendications précédentes, le dispositif de coupe (2) comprenant un outil de coupe (3) pouvant être mis en rotation par rapport à un contre-couteau (4) et la position d'écartement du contre-couteau (4) par rapport à l'outil de coupe (3) étant variable, **caractérisé en ce qu'**au contre-couteau (4) sont associés au moins deux capteurs (11, 12) espacés l'un de l'autre pour détecter les vibrations que l'outil de coupe (3) provoque lors du contact avec le contre-couteau (4), un dispositif d'analyse de signaux (5) exploitable pour recevoir les signaux des capteurs (11, 12) étant prévu, lequel est en outre exploitable pour comparer les signaux entre eux afin d'en déduire un état du dispositif de coupe (2).

15. Dispositif selon la revendication 14, **caractérisé en ce que** le contre-couteau (4) et/ou des éléments de machine adjacents à celui-ci disposent de moyens pour amortir les vibrations acoustiques solidiennes dans le contre-couteau (4).

16. Dispositif selon la revendication 14 ou la revendication 15, **caractérisé par** une unité de sortie (9) permettant d'indiquer à un opérateur l'état déterminé du dispositif de coupe (2).
